# EUROPEAN PATENT APPLICATION

(11) **EP 4 787 646 A1**
(43) Date of publication of application: **05.08.2026**
(21) Application number: 25155059.6
(22) Date of filing: 30.01.2025
(51) Int. Cl.: H02H 3/05, H02H 3/087, H01H 9/10, H01H 33/59, H01H 33/666

(54) **A FUSE ARRANGEMENT FOR AN HVDC GRID AND AN HVDC GRID SYSTEM**

(71) Applicant: Hitachi Energy Ltd, 8050 Zürich (CH)
(72) Inventor: Liljekvist, Jim, 791 34 Falun (SE)
(74) Representative: AWA Sweden AB

(57) **Abstract**

There is disclosed herein a fuse arrangement (1) for a transmission line (4) of a high voltage direct current, HVDC, grid. The fuse arrangement comprises a plurality of fuse units (10) connected in series. Each fuse unit comprises a plurality of fuse devices (20) connected in parallel to each other, and a non-linear resistor (30) connected in parallel to said plurality of fuse devices. Said plurality of fuse devices are configured to conduct at the same time. The present disclosure further relates to an HVDC grid system.

## Description

### Technical field

The present disclosure relates to a fuse arrangement. More specifically, the present disclosure relates to a fuse arrangement for a transmission line of a high voltage direct current (HVDC) grid. The present disclosure further relates to an HVDC grid system.

### Background

High Voltage Direct Current (HVDC) transmission grids are evolving from traditional point-to-point systems to more complex multipoint configurations. Initially, HVDC systems were designed to transmit power between two points, typically over long distances, with high efficiency and low power losses. However, advancements in technology are enabling the development of multipoint HVDC grids, which can connect multiple power sources and energy consumption points.

To interrupt the current when a fault occurs in an HVDC transmission, HVDC circuit breakers have been developed and designed to handle the high voltages and currents of the HVDC grid. The HVDC circuit breakers use specialized technology, such as mechanical interrupters, semiconductor-based systems, or hybrid designs, to rapidly detect and isolate faults in the HVDC line. By quickly disconnecting faulty sections, HVDC circuit breakers protect the grid from instability, enable the safe restoration of power and prevent damage to any equipment connected to the grid.

The technology required to interrupt DC current, such as hybrid or solid-state circuit breakers, is more complex and expensive than conventional AC circuit breakers and DC circuit breakers operating at lower voltage and current levels. The development and maintenance of such systems add to the overall cost of HVDC transmission infrastructure. Further, the design of HVDC circuit breakers is quite complex.

Different complements to the circuit breakers have been suggested. For example, crowbar protection systems and current limiting reactors. However, none of these alternatives provide a less complex system. Therefore, there is a need for a cheaper and less complex alternative and/or complement to the HVDC circuit breaker.

### Summary

It is therefore an object of the present disclosure to provide a fuse arrangement for a transmission line of a high voltage direct current (HVDC) grid, which alleviates at least part of the above-mentioned drawbacks. It is for example an object of the present disclosure to provide a fuse arrangement that provides an alternative to conventional HVDC circuit breakers. Further, it is an object of the present disclosure to provide a less complex and more cost-efficient way of breaking the current in an HVDC transmission line when a fault occurs, that still is reliable. A further object of the present disclosure is to provide a high voltage direct current (HVDC) grid system.

According to a first aspect of the present disclosure, a fuse arrangement for a transmission line of a high voltage direct current, HVDC, grid is provided. The fuse arrangement comprises a plurality of fuse units connected in series. Each fuse unit comprises a plurality of fuse devices connected in parallel to each other, and a non-linear resistor connected in parallel to said plurality of fuse devices. The plurality of fuse devices is configured to conduct at the same time.

According to a second aspect of the present disclosure, a high voltage direct current (HVDC) grid system is provided. The HVDC grid system comprises a substation having a converter, a transmission line for transmitting electrical power from/to the substation, and a fuse arrangement according to the first aspect, wherein the fuse arrangement is connected between the converter and the HVDC transmission line.

Fuse devices are used in alternating current (AC) and DC systems with lower voltage to protect from overcurrent. Usually, the fuse device is designed with a threshold to be able to handle a specific current and if the current exceeds this threshold a fuse element in the fuse device will blow or melt, which interrupts the current flow. In other words, conventionally, a fuse device is connected in series with the power line and the rating of the fuse device is determined based on the expected current that will flow through the power line. However, there exists no single fuse device that is able to handle the current levels of an HVDC transmission line. A fuse device connected in series with an HVDC transmission line would blow/melt directly due to the high current.

When the fuse device melts, an arc may be formed over the resulting gap. If the voltage is too high, it would not be possible for the arc that is formed to extinguish. The voltage needs to be sufficiently low for the arc to extinguish after the fuse device has melted.

A realisation made by the inventor is that even if each fuse device is not able to handle the high voltage and high current of an HVDC transmission line, the fuse devices are able to handle portions of it. By providing a plurality of fuse units in series with a plurality of fuse devices in parallel in each fuse unit and configuring the fuse devices such that all conduct at the same time, the voltage and current are divided over all fuse devices. By connecting fuse devices in parallel to each other, the current will be divided into each fuse device at each fuse unit and by connecting the fuse units in series with each other, the voltage will be divided over all the fuse units. Thereby, the fuse arrangement may be designed with a sufficient number of fuse units in series and a sufficient number of fuse devices in each fuse unit to divide the voltage and current such that existing fuse devices can be used. It should be noted that the fuse devices are configured to conduct simultaneously.

The fuse arrangement is advantageous as it allows the HVDC grid designer to use fuse arrangement instead of HVDC circuit breakers when designing the HVDC grid. A fuse arrangement is less complex and more cost-efficient than the HVDC circuit breaker. For conventional HVDC grids where there are only point to point connections, the number of HVDC circuit breakers are limited. However, with the increase complexity of the HVDC grid where multiple points connection is used, the number of HVDC circuit breakers increases rapidly, which affects the cost and the possibility to build multiple points HVDC grids. The fuse arrangement may replace some of the HVDC circuit breakers and thereby reduce the total cost for building an HVDC grid. This facilitates the advancement of HVDC technology and drives its widespread adoption.

As already mentioned, a fuse device is designed with a specific threshold. In the case of the fuse arrangement, it is the fuse arrangement that is designed for a threshold related to the HVDC transmission line and each fuse device is designed with own threshold for the current that passes through each parallel connected fuse device. When the current in the HVDC transmission line exceeds the threshold of the fuse arrangement, the current in each branch, with parallel connected fuse device, will start to increase and exceed the threshold for at least one of the plurality of fuse devices. If one fuse device blows/melts, the current will be divided on the remaining fuse devices which result in that also the remaining fuse devices will blow/melt. When all the parallel connected fuse devices have blown/melted, the current is forced to travel through the non-linear resistor. The fuse arrangement may have a current rating of at least 1 kA.

Due to the non-linear voltage versus current characteristics of the non-linear resistor, the voltage is limited when the current passes through the non-linear resistor. An ordinary resistor receives a proportional voltage which depends on the current and a higher current would therefore result in a higher voltage. With a non-linear resistor, similar voltage levels are received independently of the current. The non-linear resistor will have similar levels of voltages independently of whether the current is 1A or 10kA. In other words, when the plurality of fuse devices is healthy, current passes through the plurality of fuse devices and the voltage across the plurality of fuse devices is very low (a few volts or even less). At this voltage level, the current through the non-linear resistor is extremely low (several orders of magnitude below 1 A). When the plurality of fuse devices blow/melt however, the voltage across the plurality of fuse devices will rise to very high levels, at which point the non-linear resistors will start to conduct high current. The non-linear resistor may also be referred to as a surge arrester or a varistor.

The fuse arrangement may be seen as a "one-time" HVDC circuit breaker as the fuse arrangement needs to be replaced when it has been used once. The fuse arrangement may therefore be used at positions where faults are less likely. This allows HVDC circuit breakers which are more expensive and complex to be used at transmission lines where faults are more likely, and allows fuse arrangements according to the present disclosure to be used where faults are less likely. For example, the fuse arrangement may be used for transmission cables which are less prone to faults, and HVDC circuit breakers may be used for overhead transmission lines. By providing the fuse arrangement at position where faults are less likely, an improved HVDC grid system design may be achieved.

The transmission line may be an HVDC cable. It may be less likely that a fault occurs in an HVDC cable, and therefore the fuse arrangement may be preferred to be used with a transmission line that is an HVDC cable.

At least one of the plurality of fuse devices may comprise a conductor circuit including a circuit breaker, said conductor circuit being connected in parallel to a fuse element.

This embodiment may be advantageous as this allows current during normal operation to flow through the conductor circuit instead of through a fuse element. This may provide a more efficient fuse arrangement with lower power losses. Further, an operator is provided with more control over the fuse arrangement as the circuit breaker allows the operator to open the conductor circuit. The circuit breaker is configured to open the conductor circuit. When the conductor circuit is opened, current will flow through the fuse element instead. In other words, the conductor circuit may be used until the amplitude of the current becomes too high. When the amplitude of the current becomes too high, the circuit breaker will open the conductor circuit such that current starts to flow through the fuse elements, which will blow/melt and therefore the current will start to flow through the non-linear resistor. The fuse elements are designed to blow at a certain threshold as discussed above. In an HVDC grid system there may be more than one fuse arrangement connected to different transmission lines, and by controlling the circuit breakers in each fuse device, it may be ensured that only the fuse arrangement connected to the faulty line will blow.

As mentioned above, if one fuse device blows, the current will be divided over the remaining fuse devices which thereafter will blow as well due to the increase in current.

The circuit breaker may be configured to mechanically open the conductor circuit. The circuit breaker may for example be a switch that is opened. The circuit breaker may comprise at least one cutting device configured to cut a gap in the conductor circuit. The cutting device may for example open the conductor circuit through an explosion, or electro-mechanical force that cuts the conductor circuit.

As an example, the conductor circuit may be a busbar that is configured to allow flow of the continuous current. Upon occurrence of a short-circuit current, a sensing element may initiate triggering of the cutting device which creates a gap in the busbar. Further, a plurality of cutting devices may be placed at strategic intervals along the busbar. This would result in multiple gaps in the busbar. The arc voltage across the gaps forces the short circuit current to the parallel mounted fuse element. The fuse element melts in the conventional manner, interrupting the current without venting of flames or gases. The busbar may for example be made of copper.

The fuse arrangement may further comprise a control unit configured to activate the circuit breaker in response to a fault current.

All of said plurality of fuse devices may comprise a conductor circuit including a circuit breaker, said conductor circuit being connected in parallel to a fuse element, and the control unit may be configured to activate all circuit breakers at the same time in response to the fault current.

The control unit may be provided to synchronize the circuit breaker in each fuse device. The control unit may for example be connected to the sensing element described above and activate the circuit breakers when a fault current is sensed.

Effects and features of the second aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the fuse arrangement and the HVDC grid system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of an HVDC grid system.
- Fig. 2: schematically shows a first exemplifying embodiment of a fuse device.
- Fig. 3: schematically shows a second exemplifying embodiment of a fuse device.
- Figs. 4A-4B: schematically illustrate a further example of a fuse device.

### Detailed description

The present disclosure is described in the following by way of a number of illustrative examples. It will be appreciated that these examples are provided for illustration and explanation only and are not intended to be limiting on the scope of the disclosure.

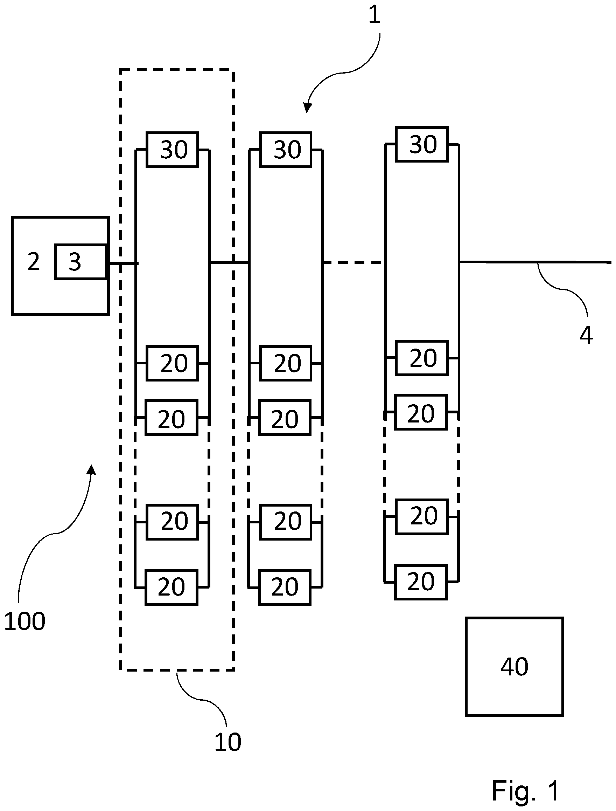

Fig. 1 illustrates an overview of a part 100 of a high voltage direct current, HVDC, grid system. Although only a part of the HVDC grid system is illustrated in Fig. 1, it is referred in the following to the HVDC grid system 100.

The HVDC grid system 100 comprises an HVDC transmission line 4 for transmitting electrical power from/to a substation 2 that comprises a converter 3. The HVDC grid system 100 further comprises a fuse arrangement 1 connected between the converter 3 and the HVDC transmission line 4.

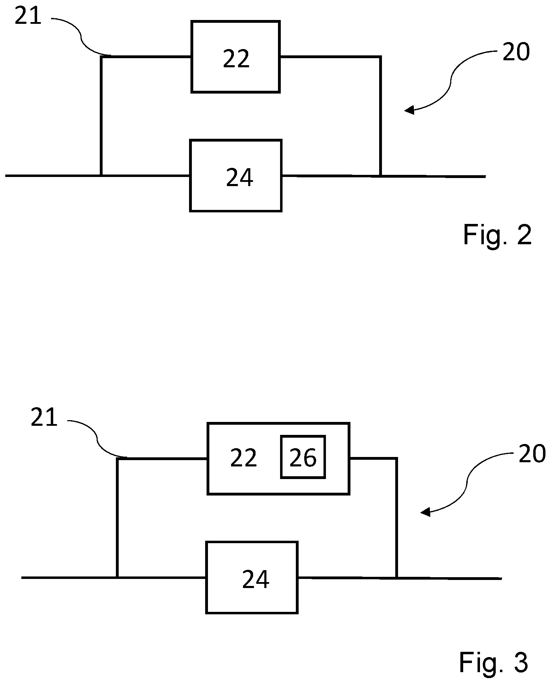

The fuse arrangement 1 comprises a plurality of fuse units 10 connected in series, see the dotted box that represents one of the fuse units 10. Each fuse unit 10 comprises a plurality of fuse devices 20 connected in parallel to each other, and a non-linear resistor 30 connected in parallel to the plurality of fuse devices 20. The plurality of fuse devices 20 are configured to conduct current at the same time. In connection to Figs. 2 and 3 examples of fuse devices 20 will be discussed. However, it should be noted that the fuse device 20 may also be just one branch with a fuse element 24.

Fuse devices 20 are commonly used in AC and DC system with lower voltages to protect from overcurrent. The fuse device 20 is provided with a threshold for how high levels of current and voltage the fuse device 20 should withstand. If the threshold is exceeded, the fuse element 24 in the fuse device 20 will blow or melt, thereby cutting the branch and impeding the current from flowing through the branch. Usually a single fuse device 20 is used in series to interrupt the current in case of a current spike. However, there is no fuse device 20 that is able to handle the current levels and the voltage levels of an HVDC grid system 100. A realisation by the inventor is that even if each fuse device 20 is not able to handle the high voltage and high current of an HVDC transmission line 4, the fuse devices 20 are able to handle portions of it. By providing a plurality of fuse units 10 in series with a plurality of fuse devices 20 in parallel in each fuse unit 10 and configuring the fuse devices 20 such that all conduct at the same time, the voltage and current are divided over all fuse devices 20.

By connecting fuse devices 20 in parallel to each other, the current will be divided into each fuse device 20 at each fuse unit 10 and by connecting the fuse units 10 in series with each other, the voltage will be divided over all the fuse units 10. Thereby, the fuse arrangement 1 may be designed with a sufficient number of fuse units 10 in series and a sufficient number of fuse devices 20 in each fuse unit 10 to divide the voltage and current such that existing fuse devices 20 can be used. In other words, the fuse arrangement 1 may be designed with a threshold adapted to the HVDC transmission line 4. Which and how many fuse units 10 and fuse devices 20 to use may be determined to match the current rating and voltage rating of the HVDC transmission line 4. When the current in the HVDC transmission line 4 exceeds the threshold of the fuse arrangement 1, this will result in that the current in each branch with parallel connected fuse devices 20 will start to increase and exceed the threshold for at least one of the fuse devices 20. If one fuse device 20 blows/melts, the current will be divided on the remaining fuse devices 20 which will result in that also the remaining fuse devices 20 will blow/melt. When all the parallel connected fuse devices have blown/melted, the current is forced to travel through the non-linear resistor 30.

The non-linear resistor 30 limits the overvoltage from the current, which allows the non-linear resistor 30 to absorb energy from the current and mitigate a fault current. With a non-linear resistor 30, similar voltage levels are received independently of the current. The non-linear resistor 30 will have similar levels of voltages independently of whether the current is 1A or 10kA. In other words, under normal operating conditions, the non-linear resistor 30 has a high resistance, and current will flow through the fuse units 10. During a fault, the fuse devices 20 will blow and current will flow through the non-linear resistor 30. The non-linear resistor 30 may be arranged as a plurality of non-limiting resistor blocks that are connected in parallel to each other and wherein each non-limiting resistor block comprises serial connected non-limiting resistors.

As the fuse devices 20 of the fuse units 10 will blow/melt when the current exceeds its threshold voltage, the fuse arrangement 1 may be seen as a "one-time" HVDC circuit breaker. The fuse arrangement 1 needs to be replaced when used once. The fuse arrangement 1 may therefore be used at positions where faults are less likely. This allows HVDC circuit breakers which are more expensive and complex to be used at transmissions lines where faults are more likely, and allows fuse arrangements 1 according to the present disclosure to be used where faults are less likely. It may be less likely that a fault occurs in an HVDC cable, and therefore the fuse arrangement 1 may be preferred to be used with a transmission line 5 that is an HVDC cable.

In Fig. 2 a first exemplifying embodiment of the fuse device 20 is illustrated. At least one of the fuse devices 20 in Fig. 1 may be according to one of the embodiments illustrated in Figs. 2 or 3. Preferably all of the fuse devices 20 are according to the one of the embodiments illustrated in Figs. 2 or 3.

The fuse device 20 comprises a conductor circuit 21 with a circuit breaker 22. The conductor circuit 21 is parallel connected to a fuse element 24. The circuit breaker 24 is configured to open the conductor circuit 21. The circuit breaker 24 may open the conductor circuit 21 mechanically. During normal operation, the conductor circuit 21 is conducting, such that current flow through the conductor circuit 21 instead of the fuse element 24. However, if a fault occurs, the circuit breaker 22 will open the conductor circuit 21 to impede current from flowing through the conductor circuit 21. When the conductor circuit 21 is opened, current will flow through the fuse element 24 instead. In other words, the conductor circuit 21 may be used until the amplitude of the current is too high. When the amplitude of the current is too high, the circuit breaker 22 will open the conductor circuit 21 such that current starts to flow through the fuse elements 24, which will blow/melt and therefore the current will be redirected through the non-linear resistor 30.

As an example, the circuit breaker 22 may be a switch, or as illustrated in Fig. 3, the circuit breaker 22 comprises at least one cutting device 26 configured to cut a gap in the conductor circuit 21, thereby mechanically opening the conductor circuit 21. The cutting device 26 may for example open the conductor circuit 21 through an explosion, or electro-mechanical force that cuts the conductor circuit 21.

As an example, the conductor circuit 21 may be a busbar that is configured to allow flow of the continuous current. Upon occurrence of a short circuit current, a sensing element (not shown) may initiate triggering of the cutting device 26 which creates gap in the busbar. Further, a plurality of cutting devices 26 may be placed at strategic intervals along the busbar. This would result in multiple gaps in the busbar. The busbar may for example be made of copper. The arc voltage across the gaps forces the short circuit current to the parallel mounted fuse element 24. The fuse element 24 melts in the conventional manner, interrupting the current without venting of flames or gases.

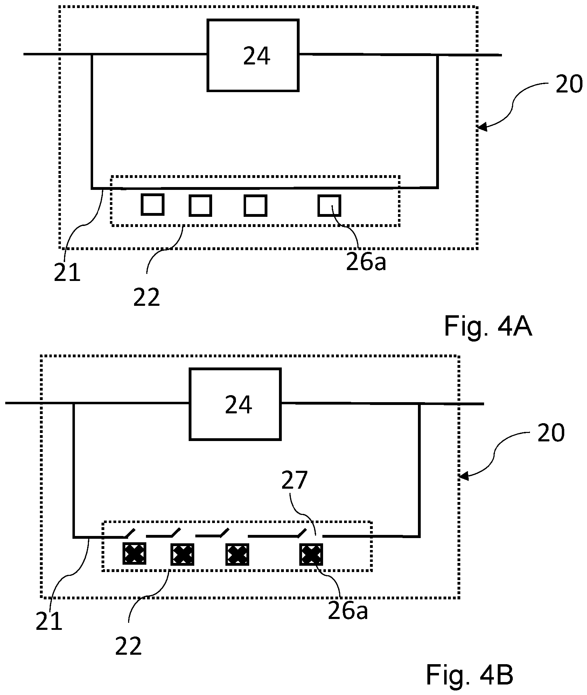

In Figs. 4A and 4B a further example of a fuse device 20 is illustrated. The fuse device 20 comprises a conductor circuit 21, a circuit breaker 22 and a fuse element 24 as described in connection to Figs. 2 and 3. The circuit breaker 22 comprises four cutting devices 26 in the form of cutting charges 26a. The cutting charges 26a are used to blow a gap 27 in the conductor circuit at each cutting charge 26a. This will prevent current from flowing through the conductor circuit 21 and force current through the fuse element 24. In Fig. 4A the fuse device is operating under normal conditions and current is flowing through the conductor circuit 21. In Fig. 4B the cutting charges 26a have blown and openings 27 in the conductor circuit 21 are created, which forces the current to flow through the fuse element 24, which will then blow/melt if the current is higher than the threshold. If the fuse element 24 blows/melts, the current will be forced through the non-linear resistor, as illustrated in Fig. 1.

Turning back to Fig. 1 it can be seen that the fuse arrangement 1 further comprises a control unit 40 that is configured to activate the circuit breaker 22 in response to a fault current. The control unit 40 may control the circuit breakers 22, in all of the fuse devices 20 which comprises a circuit breaker, to simultaneously open up the conductor circuit 21. The control unit 40 may for example be connected to the sensing element (not shown) described above and activate the circuit breakers 22 when a fault current is sensed.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A fuse arrangement (1) for a transmission line (4) of a high voltage direct current, HVDC, grid, the fuse arrangement comprising:
a plurality of fuse units (10) connected in series,
wherein each fuse unit comprises a plurality of fuse devices (20) connected in parallel to each other, and a non-linear resistor (30) connected in parallel to said plurality of fuse devices,
wherein said plurality of fuse devices are configured to conduct at the same time.

2. The fuse arrangement according to claim 1, wherein at least one of said plurality of fuse devices comprises a conductor circuit (21) including a circuit breaker (22), said conductor circuit being connected in parallel to a fuse element (24).

3. The fuse arrangement according to claim 2, wherein the circuit breaker is configured to mechanically open the conductor circuit.

4. The fuse arrangement according to any one of claim 2 or 3, wherein the circuit breaker comprises at least one cutting device (26) configured to cut a gap in the conductor circuit.

5. The fuse arrangement according to any one of claims 2 to 4, further comprising a control unit (40) configured to activate the circuit breaker in response to a fault current.

6. The fuse arrangement according to claim 5, wherein all of said plurality of fuse devices comprises a conductor circuit including a circuit breaker, said conductor circuit being connected in parallel to a fuse element, and
wherein the control unit is configured to activate all circuit breakers at the same time in response to the fault current.

7. The fuse arrangement according to any one of the preceding claims, wherein the non-linear resistor is a surge arrester.

8. The fuse arrangement according to any one of the preceding claims, wherein the fuse arrangement has a current rating of at least 1 kA.

9. A high voltage direct current, HVDC, grid system (100) comprising:
a substation (2) having a converter (3),
a transmission line (4) for transmitting electrical power from/to the substation, and
a fuse arrangement (1) according to any one of the preceding claims, wherein the fuse arrangement is connected between the converter and the HVDC transmission line.

10. The HVDC grid system according to claim 9, wherein the transmission line is an HVDC cable.
